# FASCICULE DE BREVET EUROPEEN

(11) **EP 1 738 097 B1**
(45) Date de publication et mention de la délivrance du brevet: **30.08.2017**
(21) Numéro de dépôt: 05750018.3
(22) Date de dépôt: 01.04.2005
(51) Int. Cl.: F16K 11/052, F16K 31/52, F16K 27/02

(54) **DISPOSITIF DE DEVIATION D'UN FLUX GAZEUX PAR UN REGISTRE DRAPEAU A CLAPET UNIQUE**
VERTEILERVORRICHTUNG ZUR VERTEILUNG EINER GASSTRÖMUNG MIT EINER EINZELNEN KLAPPE
DEVICE FOR DIVERTING A GAS FLOW THROUGH A SINGLE-BLADE FLAG VALVE

(30) Priorité: 19.04.2004 FR 0404116
(43) Date de publication de la demande: 03.01.2007
(73) Titulaire: Fives Solios, 78230 Le Pecq (FR)
(72) Inventeur: MELCHIOR, Henri, F-92400 Courbevoie (FR); TEXIER, Daniel, F-95240 Cormeilles en Parisis (FR)
(74) Mandataire: Cabinet Plasseraud
(86) Numéro de dépôt international: PCT/FR2005/000802
(87) Numéro de publication internationale: WO 2005/111480

(56) Documents cités:
- EP-A- 0 481 966
- US-A- 4 027 654
- US-A- 4 821 771
- US-A- 4 919 169
- US-A- 5 159 954
- US-A- 5 299 601
- US-B1- 6 443 425

## Description

L'invention concerne un dispositif de déviation avec registre drapeau à clapet unique, pour la déviation d'un flux gazeux, éventuellement chaud et/ou chargé de poussières et/ou contenant au moins un composant dangereux voire toxique, entre un circuit aéraulique primaire et un circuit aéraulique secondaire.

Ainsi, le dispositif selon l'invention permet d'orienter un flux gazeux qui, dans une première configuration, dite configuration normale, est dirigé vers le circuit aéraulique primaire, et qui, dans une seconde configuration, est dévié vers le circuit aéraulique secondaire, indépendant et isolé du circuit primaire, c'est-à-dire essentiellement étanche par rapport à ce circuit primaire.

Le dispositif de déviation de l'invention est en effet destiné à trouver une application particulièrement avantageuse dans les circuits aérauliques nécessitant une bonne isolation (étanchéité) de circuits primaire et secondaire l'un par rapport à l'autre, et ceci même en présence de pressions différentes dans ces deux circuits. En outre, et comme déjà mentionné ci-dessus, les gaz du flux orienté peuvent, le cas échéant, contenir des constituants dangereux, voire toxiques, être également chargés de poussières, éventuellement nocives, et être chauds, par exemple à une température supérieure à 200°C.

En fonctionnement normal, un tel dispositif de déviation dirige le flux gazeux vers le circuit primaire, qui est ouvert, alors que l'accès dans le circuit secondaire est fermé, le registre drapeau occupant, dans ce cas, une position dite ouverte. Par contre, dans la seconde configuration, qui correspond par exemple à la mise en oeuvre d'un procédé particulier, l'accès vers le circuit primaire est fermé alors que le flux gazeux est dirigé vers le circuit secondaire qui est ouvert, le registre drapeau occupant alors une position dite fermée.

On connaît déjà de nombreux types différents de dispositifs de déviation de flux gazeux assurant des fonctions de déviation ou d'orientation telles que définies ci-dessus. Mais, par conception, ces dispositifs connus présentent en général l'inconvénient d'une étanchéité insuffisante au niveau du ou des clapets de déviation. Dans les réalisation à clapets séparés, comportant au moins un clapet monté dans une conduite primaire et au moins un autre clapet monté dans une conduite secondaire, le mélange de gaz résultant d'un débit de fuite de l'une de ces deux conduites vers l'autre est certes limité, mais cependant cette limitation est encore insuffisante pour ne pas perturber le bon fonctionnement d'une installation équipée de tels dispositifs de déviation de flux gazeux entre deux circuits aérauliques nécessitant une bonne isolation (étanchéité) de l'un par rapport à l'autre.

En outre, lorsque les clapets automatisés de fermeture/ouverture sont doublés, les dispositifs de déviation ont pour inconvénient d'être d'une réalisation et d'une maintenance trop coûteuses.

On connaît également des dispositifs de déviation avec un registre unique commun aux conduites primaire et secondaire, qui sont moins onéreux, mais qui présentent l'inconvénient d'une moindres étanchéité.

De tels dispositifs sont déjà connus par les documents EP 0481966, US 5299601 et US 4919169.

Le but de l'invention est de proposer un dispositif de déviation avec registre drapeau à clapet unique, d'un type général connu, et qui convienne mieux aux diverses exigences de la pratique, en particulier en ce qu'il procure une amélioration importante de l'étanchéité, en réduisant les mélanges de gaz entre les deux circuits aérauliques primaire et secondaire au niveau du registre commun.

A cet effet, l'invention propose un dispositif de déviation avec registre drapeau à clapet unique, du type présenté ci-dessus et comprenant :
- un tronçon de conduit primaire, rectiligne et tubulaire de section transversale quadrangulaire, dont l'entrée et la sortie sont destinées à être reliées au circuit aéraulique primaire,
- un tronçon de conduit secondaire, également rectiligne, tubulaire et de section transversale quadrangulaire, dont l'entrée s'ouvre dans l'une des quatre parois du tronçon de conduit primaire, et dont la sortie est destinée à être reliée au circuit aéraulique secondaire,
- un clapet, de forme quadrangulaire, monté pivotant, sensiblement le long de l'un de ses bords, dans le tronçon de conduit primaire, autour d'un axe géométrique transversal à ladite paroi dans laquelle s'ouvre le tronçon de conduit secondaire et en aval de ce dernier, entre deux positions, dont une première est une position d'ouverture vers le circuit aéraulique primaire, dans laquelle le clapet ferme l'entrée du tronçon de conduit secondaire, et dont la seconde est une position de fermeture du circuit aéraulique primaire, dans laquelle le clapet est écarté de l'entrée du tronçon de conduit secondaire, et pivoté de sorte à empêcher l'écoulement du flux gazeux par la sortie du tronçon de conduit primaire, et que le flux gazeux entrant par l'entrée du tronçon de conduit primaire est dévié vers le tronçon de conduit secondaire, et
- un embiellage, relié au clapet afin de le manoeuvrer par pivotement de l'une à l'autre desdites deux positions, le clapet présentant, sur sa face tournée vers le tronçon de conduit secondaire dans sa première position, une portée annulaire quadrangulaire d'appui étanche contre un siège formé dans l'extrémité amont du tronçon de conduit secondaire, délimitant l'entrée de ce dernier dans le tronçon de conduit primaire, le clapet étant monté pivotant par rapport à l'axe géométrique de pivotement, les deux bords du clapet qui sont perpendiculaires à son bord pivotant présentant avec les parois en regard sur le tronçon de conduit primaire un jeu limité pour ne pas bloquer les pivotements du clapet entre ses deux positions, caractérisé en ce que la portée annulaire quadrangulaire et le siège sont formés par usinage, le clapet étant monté pivotant avec un jeu radial limité par rapport à l'axe géométrique de pivotement, et en ce que dans la seconde position du clapet, son bord libre, opposé à son bord pivotant, est en appui contre la paroi du tronçon de conduit primaire, qui est opposée à la paroi dans laquelle s'ouvre le tronçon de conduit secondaire.

Dans un tel dispositif, les tronçons de conduits primaire et secondaire sont donc de section rectangulaire ou carrée dans la zone d'action du clapet, qui est le plus souvent rectangulaire, et cette section des tronçons de conduit est telle que les particules et poussières entraînées ne peuvent pas sédimenter ni s'accumuler dans la zone d'action du clapet unique et pivotant, qui ferme le circuit secondaire en position « ouverte » et le circuit primaire en position « fermée ». Le jeu radial limité du clapet pivotant par rapport à l'axe géométrique de rotation permet d'assurer, en position « ouverte », un excellent placage du clapet par sa portée annulaire quadrangulaire usinée contre le siège usiné sur l'extrémité amont du tronçon de conduit secondaire, de sorte à obtenir un bon appui étanche du clapet en position « ouverte », c'est-à-dire en fonctionnement normal, dans lequel le registre est ouvert vers le circuit primaire, permettant d'obtenir un minimum de 99% du débit qui est dirigé vers le circuit primaire, et un maximum de 1% du débit qui peut se trouver dévié vers le circuit secondaire, qui est à une pression différente, et à cause des faibles fuites autour du clapet fermé. En position « fermée », c'est-à-dire lorsque le registre est fermé vers le circuit primaire et ouvert vers le circuit secondaire, le dispositif de l'invention permet d'obtenir qu'au minimum 98% du débit entrant dans le circuit secondaire proviennent de l'amont du dispositif de déviation, et 2% au maximum de ce débit peuvent revenir de l'aval du circuit primaire (en aval du clapet) dans le circuit secondaire, à cause des fuites autour du clapet dans cette position.

Dans un mode de réalisation avantageusement simple, pour obtenir le jeu radial limité précité, le clapet est monté pivotant par un bord replié, de préférence sensiblement à angle droit, par rapport au reste du clapet et solidaire, à ses extrémités latérales, de deux tourillons cylindriques coaxiaux de section circulaire, pivotant chacun avec du jeu radial dans l'un respectivement de deux paliers coaxiaux solidaires de l'un au moins desdits tronçons de conduit primaire et secondaire.

Dans ce cas, et dans un mode de réalisation pratique des paliers, l'un au moins des deux paliers, et de préférence chacun d'eux, est formé par un flasque latéral solidaire de l'un au moins desdits deux tronçons de conduit et présentant une ouverture ronde ou oblongue dans laquelle est engagé, avec du jeu radial, l'un respectivement des deux tourillons.

Selon un mode de réalisation économique, tout en améliorant encore l'étanchéité, l'un au moins des deux paliers, et de préférence chacun d'eux, est formé par un flasque latéral en U, ouvert vers l'aval du tronçon de conduit primaire, dans un logement directement adjacent au bord aval de l'entrée du tronçon de conduit secondaire, en aval de ce bord aval, et ouvert dans la paroi du tronçon de conduit primaire dans laquelle est ménagée l'entrée du tronçon de conduit secondaire.

Dans le but également d'améliorer encore l'étanchéité dans la zone du bord du clapet par lequel ce dernier est monté pivotant, le dispositif comprend également et avantageusement une bavette d'étanchéité métallique élastiquement déformable, de préférence en acier à ressort plat, de forme sensiblement quadrangulaire, liée le long de l'une de ses parties marginales à la paroi du tronçon de conduit primaire dans laquelle s'ouvre l'entrée du tronçon de conduit secondaire, en aval de cette entrée, ou au clapet pivotant, et dont la partie marginale opposée est élastiquement en appui glissant contre le clapet, ou contre ladite paroi du tronçon du conduit primaire dans laquelle s'ouvre le tronçon de conduit secondaire, en aval de l'articulation à pivotement du clapet.

Selon les contraintes de conception et d'installation, si on appelle α l'angle entre les axes des deux tronçons de conduit primaire et secondaire orientés de l'amont vers l'aval cet angle α peut varier de préférence entre 30° et 120°, et de préférence encore entre 30° et 90°, afin de ne pas trop augmenter la perte de charge créée par le « coude » de déviation du flux gazeux. Selon l'invention, le clapet dans sa seconde position est avantageusement pivoté à partir de sa première position d'un angle β maximum limité à 85 ° ou à l'angle α, selon que l'angle α est supérieur à 85°et inférieur à 120° ou compris entre 30° et 85°, et, dans ce dernier cas, l'angle β minimum est avantageusement égal à 0,35α.

En fonction de contraintes d'installation, pour un angle α donné, choisi dans une plage angulaire s'étendant de préférence de 30° à 120°, et de préférence encore de 30° à 90°, l'angle β est avantageusement choisi tel que les pertes de charge dans le flux gazeux dévié, lorsque le clapet est en seconde position, sont minimales.

Afin que les pertes de charge résultant de la présence de l'embiellage dans le dispositif soient limitées, et, en outre, que cet embiellage soit soumis aussi peu longtemps que possible aux effets du flux gazeux, éventuellement corrosif, l'embiellage, comprenant avantageusement un mécanisme bielle-manivelle, est monté de préférence sensiblement dans la partie centrale du tronçon de conduit secondaire et exerce son action sensiblement au niveau du centre de gravité du clapet. Ainsi, cet embiellage n'est soumis aux gaz que pendant la période de déviation du flux vers le circuit secondaire, et, pendant le fonctionnement vers le circuit primaire, cet embiellage ne subit que l'action, très limitée, du débit de fuite vers le circuit secondaire. En outre, un point d'action de l'embiellage sensiblement au centre de gravité du clapet permet de requérir moins d'efforts pour manoeuvrer le clapet et le tenir en tension sur son siège, en position « ouverte ». Afin de faciliter la manoeuvre, éventuellement manuelle, du mécanisme bielle-manivelle de l'embiellage, ce dernier est avantageusement entraîné par la rotation sur lui-même d'un arbre transversal, traversant le tronçon de conduit secondaire, et parallèle à l'axe de pivotement du clapet.

Mais, préférablement, l'embiellage est actionné par un actionneur à sur-longueur de course, de préférence un vérin rotatif, qui, dans la première position du clapet, maintien le clapet appliqué avec force par sa portée usinée contre le siège usiné du tronçon de conduit secondaire.

Dans ce cas, avantageusement, l'actionneur est un vérin rotatif entraînant en rotation sur lui-même l'arbre d'entraînement de l'embiellage, et est monté latéralement à l'extérieur du tronçon de conduit secondaire, ce qui met l'actionneur à l'abri du flux gazeux éventuellement corrosif, d'une part, et, d'autre part, permet plus facilement de le protéger, le cas échéant, d'un champ magnétique ambiant, par exemple par une cage de Faraday de protection d'une électrovanne de commande du vérin rotatif à fluide de manoeuvre, dans le cas où, par exemple, le dispositif est utilisé à proximité de cuves d'électrolyse d'aluminium dans lesquelles des électrodes sont alimentées en courant électrique d'une très forte intensité.

Afin, tout à la fois, de faciliter la liaison de l'embiellage et du clapet, et de rigidifier ce dernier, le clapet est avantageusement rigidifié par au moins deux nervures parallèles entre elles, et entre lesquelles est articulée une bielle de l'embiellage de manoeuvre du clapet, auquel cas l'usinage de la portée d'appui étanche du clapet est effectué après la soudure des nervures sur le clapet et, éventuellement, des tourillons ou d'un arbre de pivot sur le bord coudé du clapet.

D'autres caractéristiques et avantages de l'invention ressortiront de la description donnée ci-dessous à titre non limitatif, d'un exemple de réalisation décrit en référence aux dessins annexés sur lesquels :
- la figure 1 est une vue en plan d'un dispositif de déviation de flux gazeux avec registre drapeau à clapet unique selon l'invention,
- la figure 2 est une vue en coupe transversale selon II-II de la figure 1, et
- la figure 3 est une vue en coupe médiane longitudinale selon III-III de la figure 1.

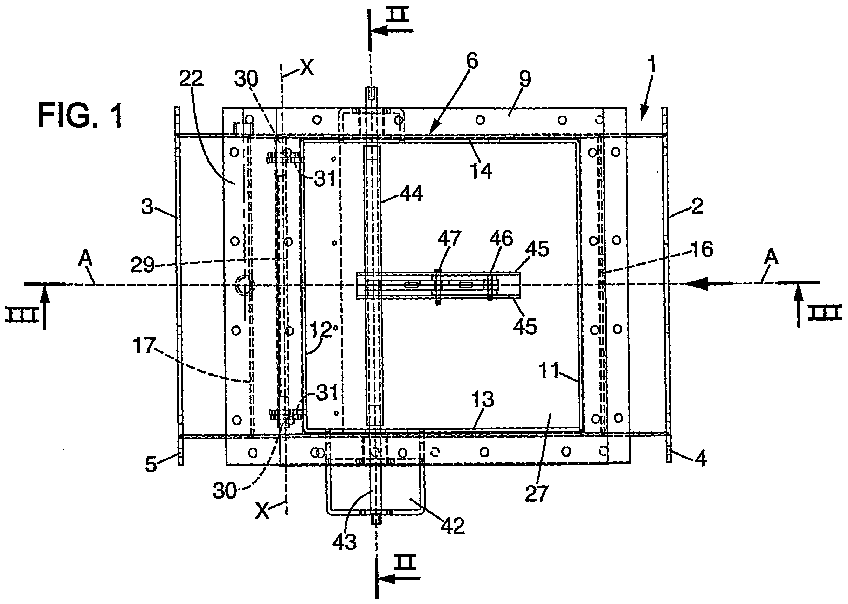

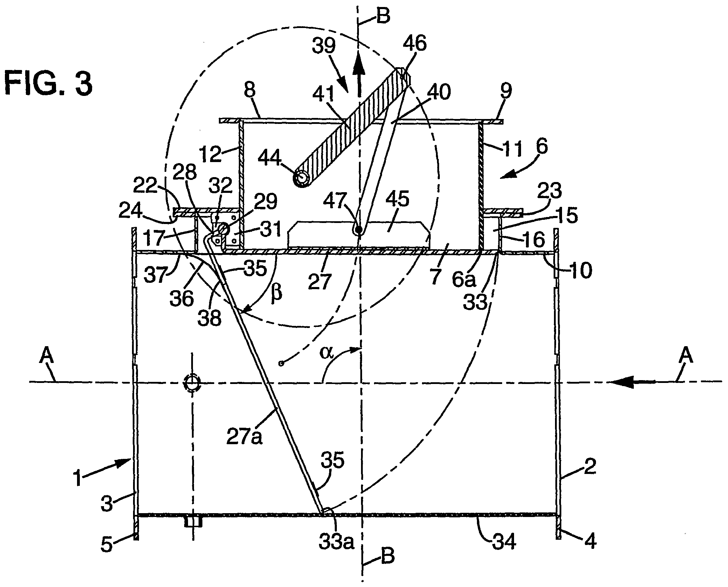

Le dispositif de déviation de flux gazeux selon les figures 1 à 3 comprend un tronçon de conduit primaire 1, qui est rectiligne et tubulaire de section transversale quadrangulaire et constante de son entrée 2 à sa sortie 3 (respectivement à droite et à gauche sur les figures 1 et 3) délimitées par des brides de fixation 4 et 5 périphériques, en saillie vers l'extérieur perpendiculairement à l'axe longitudinal et central AA du tronçon du conduit primaire 1, pour le raccordement étanche des entrée 2 et sortie 3 respectivement aux parties amont et aval d'un circuit aéraulique primaire (non représenté) de circulation d'un flux gazeux éventuellement chaud, empoussiéré et/ou contenant des éléments dangereux voire toxiques.

Dans cet exemple, le tronçon de conduit primaire 1 est un tronçon horizontal de section transversale carrée dont deux cotés sont orientés verticalement selon la hauteur et les deux autres côtés horizontalement selon la largeur du tronçon de conduit primaire 1.

Le dispositif de déviation comprend également un tronçon de conduit secondaire 6, qui est également rectiligne et tubulaire de section transversale quadrangulaire, également carrée dans cet exemple, et dont la sortie 8 est destinée à être raccordée de manière étanche à un circuit aéraulique secondaire, par une bride de sortie 9 périphérique et en saillie vers l'extérieur du tronçon 6, perpendiculairement à son axe BB longitudinal et central.

Dans cet exemple, ce tronçon de conduit secondaire 6 a son axe longitudinal BB orienté verticalement, et son entrée 7 s'ouvre dans la paroi plane supérieure 10 du tronçon de conduit primaire 1.

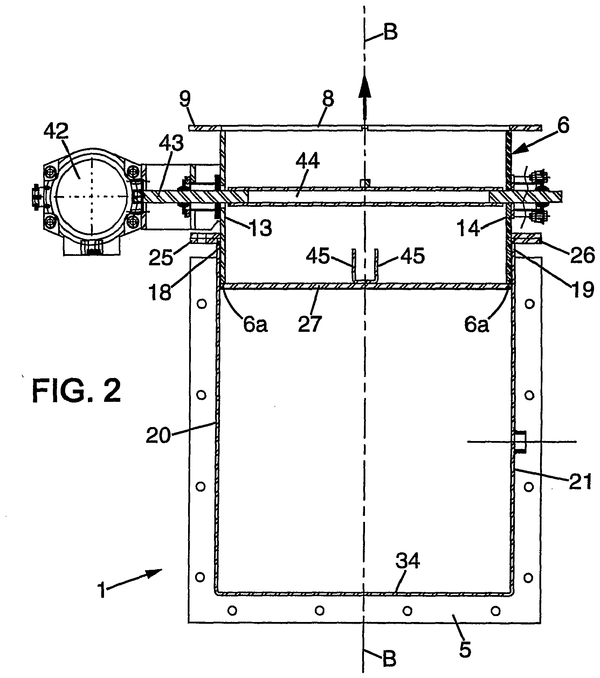

De manière pratique, l'entrée 7 du tronçon de conduit secondaire 6 est délimitée par les bords amonts (inférieurs sur les figures 2 et 3) des quatre parois planes de ce tronçon 6, à savoir les parois amont 11 et aval 12 du tronçon 6, par rapport au sens d'écoulement du flux gazeux dans le tronçon de conduit primaire 1, de son entrée 2 vers sa sortie 3, et les deux parois latérales 13 et 14 du tronçon 6, l'ensemble étant ainsi aménagé que les parties d'extrémité amont de ces quatre parois 11, 12, 13, et 14 font saillie à l'intérieur d'un puits vertical 15 de faible hauteur, agencé en saillie au-dessus de la paroi supérieure 10 du tronçon de conduit primaire 1, comme représenté sur les figures 2 et 3. Ce puits 15 est délimité par une paroi amont 16 et une paroi aval 17 qui sont des parties de la paroi supérieure 10 repliées verticalement vers le haut, ainsi que par les parties d'extrémité supérieure 18 et 19 des parois planes latérales 20 et 21 du tronçon de conduit primaire 1.

Les dimensionnements du puits 15 et du tronçon de conduit secondaire 6 sont tels que les parois 11 et 12 du tronçon 6 sont espacées respectivement en aval et en amont des parois respectivement amont 16 et aval 17 du puits 15, tandis que les parois latérales 13 et 14 du tronçon 6 sont emboîtées à l'intérieur des parois latérales 18 et 19 du puits 15 et en contact avec ces dernières, l'engagement du tronçon 6 selon son axe BB dans le puits 15 étant tel que l'entrée 7 de ce tronçon 6 est une ouverture délimitée par les bords amont des quatre parois 11, 12, 13 et 14 du tronçon 6, et située dans le plan de la paroi supérieure 10 du tronçon 1. Les tronçons de conduit 1 et 6 sont solidarisés dans cette position par une bride périphérique 22, en saillie vers l'extérieur autour du tronçon 6 et qui est boulonnée, avec interposition d'un joint d'étanchéité, par exemple en silicone, sur des rebords 23, 24, 25 et 26 respectivement des parois 16, 17, 18 et 19 du puits 15, ces rebords étant repliés vers l'extérieur.

Le dispositif de déviation comprend encore un clapet 27, ou registre drapeau, de forme rectangulaire, dont les petits côtés sont orientés horizontalement et transversalement et définissent la largeur du clapet 27, qui est de peu inférieure à la distance entre les parois latérales 20 et 21 du tronçon de conduit primaire 1, tandis que la longueur du clapet 27 est supérieure à la distance séparant les parois 11 et 12 du tronçon de conduit secondaire 6, et ce clapet 27 est monté pivotant dans le tronçon de conduit primaire 1, autour d'un axe géométrique XX horizontal et transversal, par l'un de ses bords 28, s'étendant selon la largeur, et replié sensiblement à angle droit par rapport au reste du clapet 27. Ce clapet 27 est, par exemple, une simple plaque métallique plane, telle qu'une pièce de tôle.

Le long de l'extrémité libre de son bord replié 28, le clapet 27 est solidaire d'un axe de pivot 29, dont les deux extrémités, tournées chacune vers l'une respectivement des deux parois latérales 18 et 19 du puits 15, constituent des tourillons 30 cylindriques de section circulaire et coaxiaux autour de l'axe géométrique XX de pivot, dont chacun est monté pivotant, avec un faible jeu radial par rapport à l'axe géométrique XX, dans l'un respectivement de deux paliers 31 coaxiaux et solidaires du tronçon de conduit secondaire 6, en aval (par rapport au sens d'écoulement du flux gazeux dans le tronçon de conduit primaire 1) de la paroi aval 12 de ce tronçon 6.

Dans cet exemple, chacun des deux paliers 31 est constitué d'un flasque latéral solidaire de la face aval de la partie d'extrémité inférieure de la paroi aval 12 du tronçon 6, de sorte à faire saillie dans le logement délimité immédiatement en aval de la paroi 12 du tronçon 6, entre cette paroi 12 et la paroi aval 17 du puits et en dessous de la bride 22, comme clairement représenté sur la figure 3. Dans ce logement, chacun des flasques 31 s'étend sensiblement parallèlement aux parois latérales 18 et 19 de ce logement, et présente une ouverture oblongue 32 dans laquelle l'un respectivement des deux tourillons 30 est engagé avec du jeu radial.

Dans cet exemple, l'ouverture oblongue 32 de chaque flasque de palier 31 est délimitée par les deux branches d'un flasque 31 en forme de U couché vers l'aval du tronçon de conduit principal 1, donc ouvert en regard de la paroi aval 17 du puits 15 et du logement qui reçoit l'articulation à pivotement du clapet 27.

Ainsi, le clapet 27 est monté pivotant, dans le tronçon de conduit primaire 1, sensiblement avec étanchéité entre ses bords perpendiculaires à son axe de pivot 29 et les parois latérales 20 et 21 en regard du tronçon de conduit 1, du fait du jeu limité entre ces bords et ces parois pour ne pas bloquer le pivotement du clapet 27,qui pivote entre deux positions extrêmes, dont une première, dans laquelle le clapet 27 est représenté en coupe (et donc hachuré) sur les figures 2 et 3 est une position dite normale ou « ouverte » vers le circuit aéraulique primaire, dans laquelle le clapet 27 est appliqué contre les bords amont, délimitant l'ouverture d'entrée 7 du tronçon du conduit secondaire 6, des parois 11, 12, 13 et 14 de ce tronçon 6, de sorte à fermer cette entrée 7 afin que le flux gazeux s'écoule de l'entrée 2 à la sortie 3 du tronçon de conduit primaire 1. La seconde position du clapet 27 est une position de fermeture du circuit aéraulique primaire, dans laquelle le clapet, repéré par la référence 27a sur la figure 3, est écarté de l'entrée 7 du tronçon de conduit secondaire 6 et pivoté jusqu' à ce que son bord transversal libre 33, opposé à son bord recourbé pivotant 28, est en appui, comme repéré en 33a sur la figure 3, contre la paroi inférieure 34 du tronçon de conduit primaire 1, de manière sensiblement étanche, de sorte que le flux gazeux entrant par l'entrée 2 du tronçon de conduit primaire 1 est dévié par le clapet dans sa position 27a vers l'entrée 7 du tronçon du conduit secondaire 6.

En raison de la forme rectangulaire du clapet 27 et de sa longueur par rapport à la hauteur du tronçon de conduit primaire 1, en position de fermeture du circuit aéraulique primaire,, le clapet 27a (voir figure 3) est incliné d'un angle β par rapport à sa position « ouverte », dans laquelle le clapet 27 ferme l'entrée 7 du tronçon de conduit secondaire 6, et son bord libre 33a, en appui contre la paroi inférieure 34, est axialement en amont, dans le tronçon 1, de l'axe de pivot 29 et des tourillons 30 de l'autre bord transversal coudé 28 de ce clapet 27.

Pour assurer, en position « ouverte », une fermeture pratiquement étanche de l'entrée 7 du tronçon de conduit secondaire 6, le clapet 27 présente, sur sa face (supérieure sur la figure 3) qui est tournée vers le tronçon de conduit secondaire 6, une portée 35 annulaire carrée et usinée, pour un appui étanche contre un siège 6a formé par usinage des bords amont (inférieurs sur les figures 2 et 3) des parois 11, 12, 13 et 14 du tronçon 6 contre lesquels le clapet 27 vient en appui dans sa position de fermeture de l'entrée 7 de ce tronçon 6. Un bon appui étanche du clapet 27 par sa portée 35 carrée et usinée contre le siège 6a usiné à l'extrémité amont du tronçon de conduit secondaire 6 est permis grâce au jeu radial limité avec lequel les tourillons 30 du bord recourbé 28 du clapet 27 sont montés chacun dans l'ouverture oblongue 32 du flasque de pallier en U 31 correspondant.

Sur la figure 3, on a représenté schématiquement en 35 les deux côtés transversaux de la portée annulaire et carrée usinée sur le clapet 27, cette portée 35 pouvant être usinée sur un bossage annulaire et carré en saillie sur la face du clapet 27 tournée vers le tronçon de conduit secondaire 6, ou, au contraire usiné sur le fond d'un lamage annulaire carré ménagé dans cette face du clapet 27.

Grâce à la coopération de l'axe de pivot 30 monté tourillonnant avec du jeu radial dans les deux paliers 31 et de la portée usinée 35 pour l'appui du clapet 27 contre le siège usiné 6a sur l'extrémité amont du tronçon de conduit secondaire 6, (par rapport à un écoulement dévié selon l'axe BB de ce tronçon 6), en position normale, c'est-à-dire lorsque le clapet 27 ferme l'ouverture 7 d'entrée du tronçon de conduit secondaire 6,on peut définir que 99% au minimum du débit gazeux pénétrant par l'entrée 2 du tronçon de conduit primaire 1 est dirigé jusqu'à sa sortie 3, vers le circuit aéraulique primaire, et au maximum 1% de ce débit peut se trouver être dévié par le circuit aéraulique secondaire, au travers du tronçon de conduit secondaire 6, en raison de fuites résiduelles autour du clapet 27, et du fait que le circuit aéraulique secondaire peut être à une pression différente de celle du circuit aéraulique primaire. En position dite « fermée », c'est-à-dire dans la position 27a du clapet, au minimum 98% du débit gazeux sortant par la sortie 8 du tronçon de circuit secondaire 6 provient de l'amont de l'entrée 2 du tronçon de circuit primaire 1 par déviation dans le dispositif , et 2% au maximum de ce débit peut revenir de l'aval du circuit aéraulique primaire, par la sortie 3 du tronçon de conduit primaire 1, et s'écouler dans le tronçon de conduit secondaire 6 en raison des fuites autour du clapet 27.

En position « fermée », dans laquelle le clapet 27 en position 27a ferme l'accès du flux gazeux au circuit primaire, un écoulement de gaz relativement important et venant de l'aval du circuit primaire, sous l'effet de la différence de pression entre les circuit secondaire et primaire, pourrait se produire au niveau du bord coudé 28 et de l'axe de pivot 30 du clapet 27. Cet écoulement de gaz est éliminé par la mise en place d'une bavette d'étanchéité 36 métallique, élastiquement déformable, appelée également clinquant, qui est de préférence réalisée à l'aide d'une pièce plate rectangulaire en acier à ressort, fixée le long de l'une de ses parties marginales transversales 37 contre la face inférieure de la paroi supérieure 10 du tronçon du conduit primaire 1, en aval du logement dans lequel le bord coudé 28 du clapet 27 est monté pivotant , tandis que l'autre partie marginale opposée 38 est élastiquement en appui glissant contre le clapet 27, quelque soit l'angle β pris par le clapet 27 en position de fermeture.

En variante, et suivant l'angle β de pivotement du clapet 27, il est possible de fixer la bavette 36 par sa partie marginale 38 sur le clapet 27, et la bavette 36 est en appui élastique glissant par son extrémité marginale opposée 37 contre la face interne de la paroi supérieure 10 du tronçon du conduit primaire 1.

Pour commander les mouvements du clapet 27 d'une position à l'autre, le dispositif de déviation comprend également un embiellage de manoeuvre 39, comportant un ensemble à bielle 40 et manivelle 41, pouvant être manoeuvré manuellement, mais de préférence entraîné par un actionneur 42, tel qu'un vérin rotatif, assurant une sur-longueur de course afin de maintenir le clapet 27 plaqué avec force contre son siège usiné 6a à l'extrémité amont du tronçon de conduit secondaire 6 en saillie dans le puits 15 et délimitant l'entrée 7 de ce tronçon 6.

Le vérin rotatif 42 est fixé, comme visible sur les figures 1 et 2, latéralement à l'extérieur de la paroi latérale 13 du tronçon secondaire 6, et, par l'intermédiaire de son arbre de sortie 43, il entraîne en rotation sur lui-même un arbre de transmission 44, parallèle à l'axe XX de pivotement du clapet 27, et qui traverse le tronçon de conduit secondaire 6, dans les deux parois latérales 13 et 14 duquel cet arbre transversal 44 est monté pivotant. Sensiblement au milieu de l'arbre transversal 44, ce dernier est rendu solidaire en rotation d'une extrémité de la manivelle 41, dont l'autre extrémité est articulée à pivotement, autour d'un axe 46 sensiblement parallèle à l'arbre 44 et à l'arbre XX de pivotement du clapet 27, sur une extrémité de la bielle 40, dont l'autre extrémité est articulée au clapet 27.

Ainsi, l'arbre 44, entraîné en rotation par le vérin rotatif 42, entraîne lui-même en rotation la manivelle 41, qui déplace la bielle 40 de sorte à manoeuvrer le clapet 27 de l'une à l'autre de ses deux positions extrêmes de déplacement. A cet effet, le vérin rotatif 42 est réversible.

Dans cette configuration, l'embiellage 39 et l'arbre d'entraînement 44 sont montés dans le tronçon de conduit secondaire 6, l'embiellage 39 occupant même sensiblement la partie centrale de ce tronçon 6, de sorte à exercer son action sensiblement au niveau du centre de gravité du clapet 27, afin d'améliorer encore l'appui étanche du clapet 27 contre son siège 6a. Pour cela, la bielle 40 est articulée au clapet 27 en étant montée à pivotement, autour d'un axe 47 transversal, parallèle à l'axe de pivotement XX du clapet 27 ainsi qu'aux axes de l'arbre transversal 44 et de l'articulation 46 de la bielle 40 sur la manivelle 41, entre deux nervures 45 parallèles l'une à l'autre et soudées sur la face du clapet 27 qui est tournée vers le tronçon de conduit secondaire 6, afin de rigidifier le clapet 27. Comme représenté sur la figure 2, les deux nervures 45 peuvent être constituées par les deux flancs d'un tronçon de profilé en U, soudé sur le clapet 27.

Dans cette réalisation, la soudure des nervures 45 ainsi que des tourillons 30 et/ou de l'axe de pivot 29 sur le clapet 27, réalisé en tôle, doit intervenir avant l'usinage de la portée 35 annulaire et quadrangulaire d'appui étanche de ce clapet 27 contre le siège étanche 6a usiné à l'extrémité amont des quatre parois 11, 12, 13 et 14 du tronçon de conduit secondaire 6.

Concernant l'embiellage 39, on note qu'il est préférable que le point d'action de l'arbre d'entraînement transversal 44 sur la manivelle 41 soit situé, dans la direction selon l'axe AA du tronçon de conduit primaire 1, entre l'axe XX de pivot du clapet 27 et le point d'action de la bielle 40 sur le clapet 27, sensiblement au niveau de l'axe 47 d'articulation de la manivelle 40 sur les nervures 45, tandis qu'en direction axiale selon l'axe BB du tronçon de conduit secondaire 6, le point d'action de l'arbre rotatif 44 sur la manivelle 41 est décalé vers l'aval, dans le tronçon de conduit secondaire 6, par rapport au point d'action de la bielle 40 sur le clapet 27 en position de fermeture du tronçon de conduit secondaire 6.

Cette configuration présente de nombreux avantages. En particulier, l'embiellage 39 ainsi que l'arbre d'entraînement 44 ne sont balayés par le flux gazeux que dans la position « fermée » du clapet 27a, dans laquelle le flux gazeux est dévié vers le circuit aéraulique secondaire, situation qui se produit, dans les applications envisagées, moins fréquemment et moins longtemps que la situation dans laquelle le clapet 27 est en position « ouverte », dans laquelle il ferme le tronçon de conduit secondaire 6. De plus, l'ensemble de l'embiellage 39, de son arbre d'entraînement 44 et de l'actionneur 42, ainsi que l'ensemble du clapet 27 et de son articulation à pivotement sont, dans cet exemple, montés sur le tronçon de conduit secondaire 6, qui, ainsi équipé, est simplement partiellement engagé et fixé ensuite dans et sur le tronçon de conduit primaire 1. Les opérations délicates d'assemblage, de soudage et d'usinage sont ainsi regroupées sur des éléments qui sont tous montés sur le tronçon de conduit secondaire 6, ce qui simplifie considérablement la réalisation du tronçon de conduit primaire 1, et permet de réduire les coûts de fabrication et de maintenance du dispositif de déviation.

De plus, la section des deux tronçons 1 et 6 du dispositif est telle que les particules et poussières entraînées ne peuvent pas s'accumuler ni sédimenter dans la zone d'action du clapet 27.

On comprend que le positionnement de l'embiellage 39 peut être optimisé en fonction de la longueur du clapet 27 et de son angle de rotation β entre ses deux positions extrêmes. Cependant, l'utilisation de cet embiellage 39 et son positionnement sensiblement à la moitié de la longueur du clapet 27 permettent d'assurer un meilleur placage du clapet 27 contre son siège, en position de fermeture du tronçon de conduit secondaire 6, et de moindres efforts pour la manoeuvre et le maintien en tension du clapet contre son siège sont requis.

Selon les contraintes de conception et d'installation, l'angle α entre les tronçons de conduit primaire 1 et secondaire 6, donc l'angle entre les axes AA et BB de ces deux tronçons, orientés de l'amont vers l'aval, et donc aussi l'angle des flux gazeux correspondants, peut varier de préférence entre 30° et 120°, et de préférence encore entre 30° et 90°, cette dernière valeur de l'angle α étant celle qui correspond à la réalisation des figures 1 à 3. Cette plage angulaire est préférée afin de ne pas augmenter dans une mesure importante la perte de charge créée par le « coude » de déviation du flux gazeux. A cet effet, lorsque l'angle α est compris entre environ 85° et environ 120°, l'angle β maximum, dans lequel le clapet est en position 27a d'obturation du tronçon de conduit primaire 1, est de préférence de 85°, alors que pour un angle α compris entre environ 30° et environ 85°, l'angle β du clapet 27 peut être choisi au maximum égal à l'angle α et au minimum égal à 0.35 α. En d'autres termes, quant α est compris entre 30° et 85°, l'angle β est compris entre α et 0.35 α, tandis que lorsque α est compris entre 85° et 120° l'angle β est au maximum de 85°.

D'une manière plus générale, pour un angle α donné et choisi dans une plage angulaire s'étendant de 30° à 120°, et de préférence de 30° à 90°, l'angle β est avantageusement choisi tel que les pertes de charge dans le flux gazeux dévié, lorsque le clapet est en position 27a d'obturation du tronçon de conduit primaire 1, sont minimales.A défaut d'être les plus faibles, et en fonction des contraintes d'installation, l'angle β peut être choisi pour que les pertes de charge soient les plus proches possibles de leur valeur minimum.

Par rapport à l'axe AA du tronçon de conduit primaire 1, le tronçon de conduit secondaire 6 peut être orienté sur 360° autour de l'axe AA, en fonction des contraintes créées par l'installation environnante. Cependant, l'étanchéité et la mobilité du clapet 27 sont fortement influencées et favorisées si l'axe XX de rotation du clapet 27 est horizontal, comme représenté sur les figures 1 à 3.

Dans un exemple particulier d'application, le dispositif de déviation selon l'invention peut être utilisé dans les ateliers d'électrolyse de l'aluminium, ou dans des applications similaires, produisant des gaz chauds qu'il faut évacuer pour des traitements de filtration et/ou neutralisation afin de les épurer. En effet, ces gaz peuvent, le cas échéant, contenir des constituants dangereux, voire toxiques et/ou être chargés de poussières nocives, de sorte qu'ils ne peuvent pas être mis dans l'atmosphère sans traitement d'épuration préalable. En outre, la température de ces gaz peut dépasser 200°C. Il est donc nécessaire de confiner ces gaz et d'en assurer l'évacuation vers un système de traitement centralisé. Pour cela, les cuves où sont générés ces gaz sont couvertes de façon étanche et équipées de tuyauteries d'aspiration classique. Les circuits d'aspiration de plusieurs cuves sont regroupés en fonction des volumes de gaz à extraire, volumes qui sont acheminés vers un ensemble de traitement et d'épuration/refroidissement, à la sortie duquel les gaz sont rejetés dans l'atmosphère. Classiquement, dans les ateliers d'électrolyse d'aluminium, des débits de gaz supérieurs à 1 million de m³/h sont extraits et traités par filtration et épuration. Ces ateliers fonctionnant en continu, il n'est pas envisageable d'attendre ou d'effectuer l'arrêt total de l'installation pour effectuer certaines interventions périodiques de maintenance ou de service, ou encore en cas d'incident. Pour effectuer ces interventions, la couverture étanche de confinement d'une ou plusieurs cuves doit être ouverte, ce qui modifie considérablement les conditions d'aspiration sur cette ou ces cuves, et peut conduire à perturber également des conditions d'aspiration des autres cuves, reliées au même réseau d'aspiration et de traitement, de sorte que globalement, des conditions de rejet dans l'atmosphère peuvent être créées, qui se trouvent hors des limites normatives ou fixées pour l'installation considérée.

A cet effet, il a déjà été prévu des installations de « double aspiration » ou de « sur aspiration », qui font intervenir un réseau secondaire, additionnel, d'aspiration agissant sur chacune des cuves. En cas d'opération de service ou de maintenance sur une cuve donnée, l'aspiration des gaz de cette cuve est déviée vers le réseau de sur aspiration, et la tuyauterie d'aspiration principale est isolée de cette cuve par un dispositif de déviation de débit, du type de celui selon la présente invention, afin de ne pas perturber les conditions d'aspiration sur les autres cuves, en fonctionnement, appartenant au même circuit de traitement et d'épuration.

Ainsi, alors que dans le circuit normal ou principal, l'aspiration est assurée par un ou plusieurs ventilateur(s) d'exhaure placé(s) en aval du système de traitement, dans le circuit de sur-aspiration l'aspiration est assurée par un ventilateur (également dénommé booster), qui crée une aspiration forcée, et dans lequel passent des gaz non traités, qui sont ensuite réinjectés dans le circuit normal, juste avant l'unité du traitement d'épuration des gaz.

Ainsi, grâce à l'utilisation de dispositifs de déviation de flux gazeux du type de celui faisant l'objet de la présente invention, il est possible d'isoler une cuve en maintenance ou pour une opération de service particulière, sans déséquilibrer le circuit aéraulique principal, tout en maintenant une aspiration efficace sur cette cuve par le circuit aéraulique secondaire.

De plus, les deux circuits aérauliques (principal et secondaire ou auxiliaire) ne fuient pas l'un vers l'autre, ce qui est extrêmement important. En effet, les cuves étant installées en parallèle et en nombre éventuellement important (pouvant atteindre 350 cuves), si le clapet de chacun des dispositifs de déviation de flux gazeux utilisés admet une fuite de quelques pourcent, en position « ouverte », alors le circuit aéraulique secondaire doit absorber la somme de ces fuites, ce qui peut représenter un débit important, compte tenu du nombre de cuves. Par contre, en position « fermée » et même si l'étanchéité reste un critère important au niveau du clapet, une fuite du circuit aéraulique primaire vers le circuit aéraulique secondaire est moins gênante, puisque seules quelques cuves sont simultanément raccordées au circuit aéraulique secondaire (parce que faisant l'objet d'opérations de services ou de maintenance), de sorte que la somme des fuites éventuelles à absorber par le circuit aéraulique secondaire est bien moins importante.

On comprend que le dispositif de déviation de flux gazeux selon l'invention est particulièrement bien adapté à de telles utilisations.

## Revendications

1. Dispositif de déviation avec registre drapeau à clapet unique, pour la déviation d'un flux gazeux, éventuellement chaud et/ou chargé de poussières et/ou contenant au moins un composant dangereux voire toxique, entre un circuit aéraulique primaire et un circuit aéraulique secondaire, du type comprenant :
- un tronçon de conduit primaire (1), rectiligne et tubulaire de section transversale quadrangulaire, dont l'entrée (2) et la sortie (3) sont destinées à être reliées au circuit aéraulique primaire,
- un tronçon de conduit secondaire (6), également rectiligne, tubulaire et de section transversale quadrangulaire, dont l'entrée (7) s'ouvre dans l'une (10) des quatre parois du tronçon de conduit primaire (1), et dont la sortie (8) est destinée à être reliée au circuit aéraulique secondaire,
- un clapet (27), de forme quadrangulaire, monté pivotant, sensiblement le long de l'un de ses bords (28), dans le tronçon de conduit primaire (1), autour d'un axe géométrique (XX) transversal à ladite paroi (10) dans laquelle s'ouvre le tronçon de conduit secondaire (16) et en aval de ce dernier, entre deux positions, dont une première est une position d'ouverture vers le circuit aéraulique primaire, dans laquelle le clapet (27) ferme l'entrée (7) du tronçon de conduit secondaire (6), et dont la seconde est une position de fermeture du circuit aéraulique primaire, dans laquelle le clapet (27a) est écarté de l'entrée (7) du tronçon de conduit secondaire (6), et pivoté de sorte à empêcher l'écoulement du flux gazeux par la sortie (3) du tronçon de conduit primaire (1), et que le flux gazeux entrant par l'entrée (2) du tronçon de conduit primaire (1) est dévié vers le tronçon de conduit secondaire (6), et
- un embiellage (39), relié au clapet (27) afin de le manoeuvrer par pivotement de l'une à l'autre desdites deux positions, le clapet (27) présentant, sur sa face tournée vers le tronçon de conduit secondaire (6) dans sa première position, une portée (35) annulaire quadrangulaire d'appui étanche contre un siège (6a) formé dans l'extrémité amont du tronçon de conduit secondaire (6), délimitant l'entrée (7) de ce dernier dans le tronçon de conduit primaire (1), le clapet (27) étant monté pivotant par rapport à l'axe géométrique de pivotement (XX), les deux bords du clapet (27) qui sont perpendiculaires à son bord pivotant (28) présentant avec les parois (20, 21) en regard sur le tronçon de conduit primaire (1) un jeu limité pour ne pas bloquer les pivotements du clapet (27) entre ses deux positions,
**caractérisé en ce que** la portée (35) annulaire quadrangulaire et le siège (6a) sont formés par usinage, le clapet (27) étant monté pivotant avec un jeu radial limité par rapport à l'axe géométrique de pivotement (XX), et **en ce que** dans la seconde position du clapet (27a), son bord libre (33), opposé à son bord pivotant (28), est en appui contre la paroi (34) du tronçon de conduit primaire (1), qui est opposée à la paroi (10) dans laquelle s'ouvre le tronçon de conduit secondaire (6).

2. Dispositif de déviation selon la revendication 1, **caractérisé en ce que** le clapet (27) est monté pivotant par un bord (28) replié de préférence sensiblement à angle droit, par rapport au reste du clapet (27) et solidaire, à ses extrémités latérales, de deux tourillons (30) cylindriques coaxiaux de section circulaire, pivotant chacun avec du jeu radial dans l'un respectivement de deux paliers (31) coaxiaux solidaires de l'un (6) au moins desdits tronçons de conduit primaire (1) et secondaire (6).

3. Dispositif de déviation selon la revendication 2, **caractérisé en ce que** l'un au moins des deux paliers est formé par un flasque (31) latéral solidaire de l'un (6) au moins desdits deux tronçons de conduit (16) et présentant une ouverture (32) ronde ou oblongue dans laquelle est engagé, avec du jeu radial, l'un respectivement des deux tourillons (30).

4. Dispositif de déviation selon la revendication 3, **caractérisé en ce que** l'un au moins des deux paliers est formé par un flasque latéral en U (31), ouvert (32) vers l'aval du tronçon de conduit primaire (1), dans un logement directement adjacent au bord aval de l'entrée (7) du tronçon de conduit secondaire (6), en aval de ce bord aval, et ouvert dans la paroi (10) du tronçon de conduit primaire (1) dans laquelle est ménagée l'entrée (7) du tronçon de conduit secondaire (6).

5. Dispositif de déviation selon l'une quelconque des revendications 1 à 4, **caractérisé en ce qu'**il comprend également une bavette (36) d'étanchéité métallique élastiquement déformable, de préférence en acier à ressort plat, de forme sensiblement quadrangulaire, liée le long de l'une de ses parties marginales (37) à la paroi (10) du tronçon de conduit primaire (1) dans laquelle s'ouvre l'entrée (7) du tronçon de conduit secondaire (6), en aval de cette entrée (7), ou au clapet pivotant (27), et dont la partie marginale opposée (38) est élastiquement en appui glissant contre le clapet (27), ou contre ladite paroi (10) du tronçon du conduit primaire (1) dans laquelle s'ouvre le tronçon de conduit secondaire (6), en aval de l'articulation à pivotement du clapet (27).

6. Dispositif de déviation selon l'une quelconque des revendications 1 à 5, **caractérisé en ce que**, si α est l'angle entre les axes (AA, BB) des deux tronçons de conduit primaire (1) et secondaire (6) orientés de l'amont vers l'aval, le clapet (27a) dans sa seconde position est pivoté, à partir de la première position, d'un angle P maximum limité à 85° ou à l'angle α, selon que l'angle α est supérieur à 85°et inférieur à 120° ou compris entre 30° et 85°, et, dans ce dernier cas, l'angle β minimum est égal à 0,35α.

7. Dispositif de déviation selon l'une quelconques des revendications 1 à 6, **caractérisé en ce que**, pour un angle α donné, entre les axes des deux tronçons de conduit (1, 6) orientés de l'amont vers l'aval, et choisi dans une plage angulaire s'étendant de 30° à 120°, et de préférence de 30° à 90°, l'angle β de pivotement du clapet (27) de sa première à sa seconde position est choisi tel que les pertes de charge dans le flux gazeux dévié, lorsque le clapet (27a) est en seconde position, sont minimales.

8. Dispositif de déviation selon l'une quelconque des revendications 1 à 7, **caractérisé en ce que** l'embiellage (39), comprenant un mécanisme bielle (40)-manivelle (41), est monté sensiblement dans la partie centrale du tronçon de conduit secondaire (6) et exerce son action sensiblement au niveau du centre de gravité du clapet (27).

9. Dispositif de déviation selon la revendication 8, **caractérisé en ce que** l'embiellage (39) est entraîné par la rotation sur lui-même d'un arbre (44) transversal, traversant le tronçon de conduit secondaire (6), et parallèle à l'axe (XX) de pivotement du clapet (27).

10. Dispositif de déviation selon l'une quelconque des revendications 1 à 9, **caractérisé en ce que** l'embiellage (39) est actionné par un actionneur (42) à sur-longueur de course, de préférence un vérin rotatif, qui, dans la première position du clapet (27), maintient le clapet (27) appliqué avec force par sa portée usinée (35) contre le siège usiné (6a) du tronçon de conduit secondaire (6).

11. Dispositif de déviation selon la revendication 10 telle que rattachée à la revendication 9, **caractérisé en ce que** l'actionneur est un vérin rotatif (42) entraînant en rotation sur lui-même l'arbre (44) d'entraînement de l'embiellage (39), et est monté latéralement à l'extérieur du tronçon de conduit secondaire (6).

12. Dispositif de déviation selon l'une quelconque des revendications 1 à 11, **caractérisé en ce que** le clapet (27) est rigidifié par au moins deux nervures (45) parallèles entre elles, et entre lesquelles est articulée une bielle (40) de l'embiellage (39) de manoeuvre du clapet (27).

## Patentansprüche

1. Verteilervorrichtung mit einem Flaggenventil mit einer einzelnen Klappe zur Verteilung einer Gasströmung, die möglicherweise heiß und/oder staubhaltig ist und/oder mindestens eine gefährliche oder toxische Komponente enthält, zwischen einem primären Luftkreis und einem sekundären Luftkreis, umfassend:
- einen primären Leitungsabschnitt (1), der geradlinig und rohrförmig ist und einen viereckigen Querschnitt aufweist, wobei der Einlass (2) und der Auslass (3) dazu bestimmt sind, mit dem primären Luftkreis verbunden zu werden,
- einen sekundären Leitungsabschnitt (6), ebenfalls geradlinig, rohrförmig und mit viereckigem Querschnitt, wobei der Einlass (7) in eine (10) der vier Wände des primären Leitungsabschnitts (1) mündet, und wobei der Auslass (8) dazu bestimmt ist, mit dem sekundären Luftkreis verbunden zu werden,
- eine viereckige Klappe (27), die im Wesentlichen längs eines ihrer Ränder (28) im primären Leitungsabschnitt (1) um eine geometrische Achse (XX) schwenkbar gelagert ist, die quer zu der Wand (10) verläuft, in die der sekundäre Leitungsabschnitt (16) mündet und diesem nachgelagert, zwischen zwei Stellungen, deren erste eine Öffnungsstellung in Richtung des primären Luftkreises darstellt, in der die Klappe (27) den Einlass (7) des sekundären Leitungsabschnitts (6) schließt, und deren zweite eine Schließstellung des primären Luftkreises darstellt, in der die Klappe (27a) zu dem Einlass (7) des sekundären Leitungsabschnitts (6) beabstandet ist und derart geschwenkt wird, dass das Ausströmen der Gasströmung durch den Auslass (3) des primären Leitungsabschnitts (1) verhindert wird, und dass die durch den Einlass (2) des primären Leitungsabschnitts (1) eintretende Gasströmung in Richtung des sekundären Leitungsabschnitts (6) umgelenkt wird, und
- ein Verbindungsglied (39), das mit der Klappe (27) verbunden ist, um sie durch Schwenken von der einen zu der anderen der beiden Stellungen zu manövrieren,
wobei die Klappe (27) auf ihrer in ihrer ersten Stellung dem sekundären Leitungsabschnitt (6) zugewandten Seite eine ringförmige, viereckige Auflagefläche (35) aufweist, die dicht an einem Sitz (6a) anliegt, der am vorgelagerten Ende des sekundären Leitungsabschnitts (6) gebildet ist, sodass der Einlass (7) von letzterem in dem primären Leitungsabschnitt (1) begrenzt wird, wobei die Klappe (27) schwenkbar zur geometrischen Drehachse (XX) montiert ist, die beiden Ränder der Klappe (27), die senkrecht zu ihrem schwenkbaren Rand (28) liegen, zusammen mit den Wänden (20, 21) im Hinblick auf den primären Leitungsabschnitt (1) ein begrenztes Spiel aufweisen, um das Schwenken der Klappe (27) zwischen ihren beiden Stellungen nicht zu blockieren, **dadurch gekennzeichnet, dass** die ringförmige, viereckige Auflagefläche (35) und der Sitz (6a) durch Bearbeitung gebildet werden, wobei die Klappe (27) schwenkbar mit einem begrenzten Spiel zur geometrischen Drehachse (XX) montiert ist, und dass in der zweiten Stellung der Klappe (27a) ihr freier Rand (33), der dem schwenkbaren Rand (28) gegenüberliegt, an der Wand (34) des primären Leitungsabschnitts (1) anliegt, die gegenüber der Wand (10) liegt, in die der sekundäre Leitungsabschnitt (6) mündet.

2. Verteilervorrichtung nach Anspruch 1, **dadurch gekennzeichnet, dass** die Klappe (27) schwenkbar durch einen Rand (28) angebracht ist, der bevorzugt im Wesentlichen rechtwinklig gegenüber dem Rest der Klappe (27) zusammengeklappt und an seinen Seitenenden mit zwei zylindrischen, koaxialen Zapfen (30) mit kreisförmigem Querschnitt fest verbunden ist, die sich jeweils mit radialem Spiel in jeweils einem der zwei koaxialen Lager (31) drehen, die fest verbunden mit mindestens dem einen (6) der primären (1) und sekundären (6) Leitungsabschnitte sind.

3. Verteilervorrichtung nach Anspruch 2, **dadurch gekennzeichnet, dass** mindestens das eine der beiden Lager durch einen seitlichen Flansch (31) gebildet wird, der mit mindestens dem einen (6) der zwei Leitungsabschnitte (16) fest verbunden ist und eine runde oder längliche Öffnung (32) aufweist, in die jeweils einer der beiden Zapfen (30) mit radialem Spiel eingreift.

4. Verteilervorrichtung nach Anspruch 3, **dadurch gekennzeichnet, dass** mindestens das eine der beiden Lager durch einen U-förmigen seitlichen Flansch (31) gebildet wird, der stromabwärts des primären Leitungsabschnitts (1) offen (32) ist, in einer Aufnahme, die direkt benachbart zu dem stromabwärtigen Rand des Einlasses (7) des sekundären Leitungsabschnitts (6) ist, diesem stromabwärtigen Rand nachgelagert, und offen in der Wand (10) des primären Leitungsabschnitts (1), in dem der Einlass (7) des sekundären Leitungsabschnitts (6) angeordnet ist.

5. Verteilervorrichtung nach einem der Ansprüche 1 bis 4, **dadurch gekennzeichnet, dass** sie ferner eine metallische, elastisch verformbare Dichtungsleiste (36) umfasst, bevorzugt aus flachem Federstahl, im Wesentlichen viereckig geformt, entlang dem einen ihrer Randabschnitte (37) verbunden mit der Wand (10) des primären Leitungsabschnitts (1), in die der Einlass (7) des sekundären Leitungsabschnitts (6) mündet, diesem Einlass (7) nachgeordnet, oder mit der schwenkbaren Klappe (27), und deren gegenüberliegender Randabschnitt (38) elastisch gleitend an der Klappe (27) oder an der Wand (10) des primären Leitungsabschnitts (1) anliegt, in die der sekundäre Leitungsabschnitt (6) mündet, dem Drehgelenk der Klappe (27) nachgeordnet.

6. Verteilervorrichtung nach einem der Ansprüche 1 bis 5, **dadurch gekennzeichnet, dass**, wenn α der Winkel zwischen den von der stromaufwärtigen zu der stromabwärtigen Seite orientierten Achsen (AA, BB) der beiden Leitungsabschnitte primärer (1) und sekundärer (6) Leitungsabschnitt ist, die Klappe (27a) in ihrer zweiten Stellung, ausgehend von ihrer ersten Stellung, um einen Winkel β von höchstens 85° oder um den Winkel α geschwenkt wird, je nachdem, ob der Winkel α größer als 85° und kleiner als 120° ist oder zwischen 30° und 85° liegt, und, in letzterem Fall, der Winkel β mindestens 0,35α beträgt.

7. Verteilervorrichtung nach einem der Ansprüche 1 bis 6, **dadurch gekennzeichnet, dass**, für einen gegebenen Winkel α zwischen den von der stromaufwärtigen zu der stromabwärtigen Seite orientierten Achsen er beiden Leitungsabschnitte (1, 6) und gewählt aus einem Winkelbereich von 30° bis 120°, bevorzugt von 30° bis 90°, der Winkel β des Schwenkens der Klappe (27) von ihrer ersten in ihre zweite Stellung so gewählt wird, dass die Druckverluste in der umgelenkten Gasströmung minimal sind, wenn die Klappe (27a) sich in ihrer zweiten Stellung befindet.

8. Verteilervorrichtung nach einem der Ansprüche 1 bis 7, **dadurch gekennzeichnet, dass** das Verbindungsglied (39), das einen Schub-(40) Schwing-(41) Mechanismus umfasst, im Wesentlichen im mittleren Abschnitt des sekundären Leitungsabschnitts (6) angebracht ist und etwa im Bereich des Schwerpunktes der Klappe (27) seine Wirkung entfaltet.

9. Verteilervorrichtung nach Anspruch 8, **dadurch gekennzeichnet, dass** das Verbindungsglied (39) durch das Drehen einer Querwelle (44) um sich selbst angetrieben wird, die durch den sekundären Leitungsabschnitt (6) und parallel zu der Achse (XX) des Schwenkens der Klappe (27) verläuft.

10. Verteilervorrichtung nach einem der Ansprüche 1 bis 9, **dadurch gekennzeichnet, dass** das Verbindungsglied (39) von einem Aktor (42) mit Überhublänge betätigt wird, bevorzugt ein Drehantrieb, der, in der ersten Stellung der Klappe (27), die Klappe (27) über ihre bearbeitete Auflagefläche (35) gegen den bearbeiteten Sitz (6a) des sekundären Leitungsabschnitts (6) drückt.

11. Verteilervorrichtung nach Anspruch 10, sofern abhängig von Anspruch 9, **dadurch gekennzeichnet, dass** der Aktor ein Drehantrieb (42) ist, der die Welle (44) zum Antrieb des Verbindungsglieds (39) zur Rotation um sich selbst antreibt, und seitlich außerhalb des sekundären Leitungsabschnitts (6) angebracht ist.

12. Verteilervorrichtung nach einem der Ansprüche 1 bis 11, **dadurch gekennzeichnet, dass** die Klappe (27) durch mindestens zwei zueinander parallele Rippen (45) versteift ist, zwischen denen eine Pleuelstange (40) des Verbindungsglieds (39) zur Betätigung der Klappe (27) gelenkig gelagert ist.

## Claims

1. Diversion device with single valve element flag damper for diverting a gaseous flow, possibly hot and/or filled with dust and/or containing at least a dangerous even toxic component, between a primary aeraulic circuit and a secondary aeraulic circuit, of the type comprising:
- a section of primary duct (1), rectilinear and tubular of quadrangular cross-section, whose entrance (2) and exit (3) are intended to be connected to the primary aeraulic circuit,
- a section of secondary duct (6), also rectilinear, tubular and of quadrangular cross-section, whose entrance (7) opens into one (10) of the four walls of the section of primary duct (1), and whose exit (8) is intended to be connected to the secondary aeraulic circuit,
- a valve element (27), of quadrangular shape, mounted pivotingly, substantially along one of its edges (28), in the section of primary duct (1), about a geometric axis (XX) transverse to the said wall (10) into which the section of secondary duct (16) opens and downstream of the latter, between two positions, a first of which is a position of opening towards the primary aeraulic circuit in which the valve element (27) closes the entrance (7) of the section of secondary duct (6), and the second of which is a position of closure of the primary aeraulic circuit, in which the valve element (27a) is moved away from the entrance (7) of the section of secondary duct (6) and pivoted so as to prevent the gaseous flow from discharging through the exit (3) of the section of primary duct (1) and that the gaseous flow entering via the entrance (2) of the section of primary duct (1) is diverted towards the section of secondary duct (6), and
- a link arm assembly (39), connected to the valve element (27) in order to operate it by pivoting from one to the other of the said two positions,
the valve element (27) having, on its face turned towards the section of secondary duct (6) in its first position, a quadrangular annular bearing surface (35) to press in sealed manner against a seat (6a) formed in the upstream end of the section of secondary duct (6), delimiting the entrance (7) of the latter in the section of primary duct (1), the valve element (27) being mounted pivotingly relative to the geometric pivot axis (XX), the two edges of the valve element (27) which are perpendicular to its pivoting edge (28) having, with the facing walls (20, 21) of the section of primary duct (1), a limited clearance so as not to block the pivoting actions of the valve element (27) between its two positions, **characterized in that** the quadrangular annular bearing surface (35) and the seat (6a) are formed by machining, the valve element (27) being mounted pivotingly with a limited radial clearance relative to the geometric pivot axis (XX), and **in that**, in the second position of the valve element (27a), its free edge (33) opposite its pivoting edge (28) is resting against the wall (34) of the section of primary duct (1), which is opposite the wall (10) into which the section of secondary duct (6) opens.

2. Diversion device according to Claim 1, **characterized in that** the valve element (27) is mounted pivotingly by an edge (28) folded preferably substantially at right angles to the rest of the valve element (27) and secured, at its lateral ends, to two coaxial cylindrical trunnions (30) of circular cross-section, each pivoting with some radial clearance in one respectively of two coaxial bearings (31) secured to one (6) at least of the said sections of primary (1) and secondary (6) duct.

3. Diversion device according to Claim 2, **characterized in that** at least one of the two bearings is formed by a lateral side plate (31) secured to at least one (6) of the said two sections of duct (16) and having a round or oblong opening (32) in which is engaged, with radial clearance, respectively one of the two trunnions (30).

4. Diversion device according to Claim 3, **characterized in that** at least one of the two bearings is formed by a lateral, U-shaped side plate (31), open (32) in the downstream direction of the section of primary duct (1), in a housing directly adjacent to the downstream edge of the entrance (7) of the section of secondary duct (6), downstream of this downstream edge, and open in the wall (10) of the section of primary duct (1) in which the entrance (7) of the section of secondary duct (6) is made.

5. Diversion device according to any one of Claims 1 to 4, **characterized in that** it also comprises an elastically deformable metal sealing flap (36), preferably made of flat spring steel, of substantially quadrangular form, connected along one of its marginal portions (37) to the wall (10) of the section of primary duct (1) into which the entrance (7) of the section of secondary duct (6) opens, downstream of this entrance (7), or to the pivoting valve element (27), and the opposite marginal portion (38) of which is elastically pressing slidingly against the valve element (27), or against the said wall (10) of the section of primary duct (1) into which the section of secondary duct (6) opens, downstream of the pivoting articulation of the valve element (27).

6. Diversion device according to any one of Claims 1 to 5, **characterized in that**, if α is the angle between the axes (AA, BB) of the two sections of primary (1) and secondary (6) ducts oriented from upstream to downstream, the valve element (27a) in its second position is pivoted, from the first position, through a maximum angle ß limited to 85° or to the angle α, depending on whether the angle α is greater than 85° and less than 120° or lying between 30° and 85°, and, in the latter case, the minimum angle ß is equal to 0.35 α.

7. Diversion device according to any one of Claims 1 to 6, **characterized in that**, for a given angle α, between the axes of the two sections of duct (1, 6) oriented from upstream to downstream, and chosen in an angular range extending from 30° to 120°, and preferably from 30° to 90°, the angle ß of pivot of the valve element (27) from its first to its second position is chosen such that the pressure losses in the diverted gaseous flow, when the valve element (27a) is in second position, are minimal.

8. Diversion device according to any one of Claims 1 to 7, **characterized in that** the link arm assembly (39), comprising a link arm (40)-handle (41) mechanism, is mounted substantially in the central portion of the section of secondary duct (6) and exerts its action substantially on the centre of gravity of the valve element (27).

9. Diversion device according to Claim 8, **characterized in that** the link arm assembly (39) is driven by rotating on itself a transverse shaft (44), traversing the section of secondary duct (6), and parallel to the pivot axis (XX) of the valve element (27).

10. Diversion device according to any one of Claims 1 to 9, **characterized in that** the link arm assembly (39) is actuated by an overlength travel actuator (42), preferably a rotary cylinder, which, in the first position of the valve element (27), holds the valve element (27) pressed with force by its machined bearing surface (35) against the machined seat (6a) of the section of secondary duct (6).

11. Diversion device according to Claim 10, as attached to Claim 9, **characterized in that** the actuator is a rotary cylinder (42) rotating on itself the drive shaft (44) of the link arm assembly (39) and is mounted laterally outside the section of secondary duct (6).

12. Diversion device according to any one of Claims 1 to 11, **characterized in that** the valve element (27) is stiffened by at least two ribs (45) parallel with one another, and between which a link arm (40) of the link arm assembly (39) for operating the valve element (27) is articulated.
